(19) **Europäisches Patentamt / European Patent Office / Office européen des brevets**

(11) **EP 4 488 724 B1**

(12) **EUROPEAN PATENT SPECIFICATION**

(45) Date of publication and mention
of the grant of the patent:
**05.08.2026  Bulletin 2026/32**

(21) Application number: **24183530.5**

(22) Date of filing: **20.06.2024**

(51) International Patent Classification (IPC):
**G01V 1/28** *(2006.01)*   **G01V 1/30** *(2006.01)*
**G01V 1/32** *(2006.01)*   **G01V 1/34** *(2006.01)*

(52) Cooperative Patent Classification (CPC):
**G01V 1/282; G01V 1/302; G01V 1/325;**
**G01V 1/345;** G01V 2210/48; G01V 2210/51;
G01V 2210/74

(54) **SYSTEM AND METHOD FOR LEAST-SQUARES MIGRATION OF TIME-LAPSE SEISMIC DATA**

SYSTEM UND VERFAHREN ZUR KLEINQUADRATISCHEN MIGRATION VON SEISMISCHEN ZEITRAFFERDATEN

SYSTÈME ET PROCÉDÉ DE MIGRATION DES MOINDRES CARRÉS DE DONNÉES SISMIQUES RÉPÉTITIVES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.07.2023   US 202363512173 P**

(43) Date of publication of application:
**08.01.2025   Bulletin 2025/02**

(73) Proprietor: **CGG Services SAS**
**91300 Massy (FR)**

(72) Inventors:
- **ALBUQUERQUE, Danilo**
  **91300 MASSY (FR)**
- **PACHECO, Gabriel**
  **91300 MASSY (FR)**
- **OLIVEIRA, Cleberton**
  **91300 MASSY (FR)**
- **PEREIRA, Karine**
  **91300 MASSY (FR)**
- **HUARD, Benjamin**
  **91300 MASSY (FR)**
- **CYPRIANO, Luis**
  **91300 MASSY (FR)**
- **PEREIRA, Roberto**
  **91300 MASSY (FR)**
- **KHALIL, Adel**
  **91300 MASSY (FR)**
- **RUDRIGUES, Filipe**
  **91300 MASSY (FR)**

(74) Representative: **Ipsilon**
**12 Avenue d'Italie**
**75013 Paris (FR)**

(56) References cited:
**US-A1- 2017 123 090**

- **POPOVICI ALEXANDER MIHAI ET AL: "Improving OBS-streamer 4D imaging by least-squares migration", SEG TECHNICAL PROGRAM EXPANDED ABSTRACTS 2017, 17 August 2017 (2017-08-17), pages 5819 - 5823, XP093220083, DOI: 10.1190/segam2017-17739944.1**
- **GBOYEGA AYENI: "TIME-LAPSE SEISMIC IMAGING BY LINEARIZED JOINT INVERSION", THESIS, 1 April 2012 (2012-04-01), US, pages 1 - 243, XP055377247, Retrieved from the Internet <URL:http://sepwww.stanford.edu/data/media/public/docs/sep146/sep146.pdf>**

**Description**

## BACKGROUND OF THE INVENTION

### TECHNICAL FIELD

Embodiments of the subject matter disclosed herein generally relate to a system and method for migrating seismic data associated with a subsurface, and more particularly, to a time-lapse least-square migration (LSM) method that applies different non-stationary filters, for the baseline and monitor surveys, while using a common reflectivity. The method may be a single iteration LSM or a plural iteration LSM.

### DISCUSSION OF THE BACKGROUND

Seismic data is acquired to generate a profile (image) of the geophysical structure (subsurface) under the surface. While this profile does not provide an accurate location for a desired resource (e.g., oil and gas) reservoir, it suggests, to those trained in the field, the presence or absence of the resource reservoirs. Thus, providing a high-resolution image of the subsurface is an ongoing process for the exploration of natural resources.

The seismic data used for generating the image of the subsurface may be acquired in various ways, for example, with land equipment, marine equipment, ocean bottom equipment, autonomous underwater equipment, or aerial equipment. The type of sensors and sources used in any of these scenarios are known in the art and thus, not repeated herein. After the seismic data is acquired, it needs to be processed to eventually generate the image of the subsurface. There are many known algorithms for processing the seismic data. Migration is one such algorithm that is used for seismic data analysis. Migration allows for the correct positioning of subsurface structures and reflectivity. The migration algorithms are ray-based, for example, Kirchhoff migration as described in Schneider, 1978, (Schneider, W., 1978, Integral formulation for migration in two and three dimensions, Geophysics, 43, 49-76) and wave equation based, for example, Reverse-time migration (RTM) Hemon, 1978 (Hemon, C.,1978, Equations d'onde et modeles. Geophysical Prospecting, 26, 790-821). The prior art "Improving OBS-streamer 4D imaging by least-squares migration" (Zhao, Wang et al) relates to a least-square migration, LSM, based method for generating a 4D image of a subsurface. Seismic data related to the subsurface is received. The data includes a baseline dataset and a monitor dataset, with the monitor dataset being taken later in time than the baseline dataset, for the same subsurface. A baseline filter and a monitor filter is calculated, based on a same common reflectivity of the subsurface and corresponding remigrated baseline data and remigrated monitor data so that the base filter applied to the remigrated baseline data equals the monitor filter applied to the remigrated monitor data. Then the baseline filter is applied to raw migrated baseline data, and the monitor filter is then to raw migrated monitor data to generate LSM baseline data and LSM monitor data. A 4D image of the subsurface based on the LSM baseline data and the LSM monitor data is generated.

Kirchhoff migration and Reverse-time migration are inversion methods where the subsurface reflectivity is extracted from the recorded seismic data. They are influenced by the acquisition setup and the geological complexity of the subsurface. The images may suffer from lack of resolution, bad event continuity and zones with dimmed amplitude, due to band-limited sources and uneven illumination patterns of seismic waves.

A particular application for migration is time-lapse (4D) processing where images of the same underground region are obtained from two or more different datasets, e.g., baseline and monitors datasets, which are recorded at different times, usually for the purpose of reservoir monitoring (i.e., to monitor the changes in the reservoir by determining the changes between the monitors and the baseline). The level of the 4D signal (signal that corresponds to the differences between the baseline and monitor datasets) is usually small and can easily blend in with noise or problems related to the acquisition.

These limitations can be overcome by using Least-Squares Migration (LSM), which is a more robust inversion method based on minimizing the misfit between the observed data d and the synthetic data generated by the inverted reflectivity [1]. This method has been proposed to seek an inverted image, which generates simulated data that best matches the recorded seismic data d. This method effectively improves the resolution of the seismic image, compensates for inadequacies for the recorded seismic data due to acquisition, compensates for image illumination, and attenuates imaging artefacts.

LSM is traditionally solved by iteration, where each iteration typically includes: a migration, a de-migration (modelling) and a comparison to the real seismic data being imaged. More specifically, a misfit $C(m)$ between the observed data $d$ and the synthetic data $Lm$ generated by the inverted reflectivity is given by:

$$C(m) = \frac{1}{2}\|d - Lm\|^2, \quad (1)$$

where $d$ is the data, $m$ is the reflectivity, and $L$ the Born-modeling or de-migration operator. Minimization of this cost function results in the reflectivity $m$:

$$m = (L^T L)^{-1} L^T d, \qquad (2)$$

where $L^T$ is the migration operator and $L^T L$ is the Hessian matrix.

In real scenarios, directly inverting the Hessian matrix $L^T L$ is computationally unfeasible and some approximation must be performed. Iterative schemes [2-4] can be used to invert the Hessian, but they suffer from high computational cost for common 3D surveys. Alternative solutions have been proposed to make the process more feasible, for example the work described in [5-7].

However, all these algorithms have their own limitations. For example, the algorithm described in [7] uses a single iteration approach, approximating the inverse Hessian with non-stationary filters. Although it is cost-efficient, this method may leave enough imprint of the acquisition. In the context of 4D imaging, if there is not repeatability between the baseline and monitor acquisition geometries, this can destroy the 4D signal. The other known algorithms have their own limitations that are known in the art and thus, not discussed herein.

Thus, there is a need for a new process that handles the recorded seismic data (especially the 4D signal) in a more efficient way, reduces a time spent by the computing device for generating the image of the subsurface, and overcomes the limitations noted above with the existing methods. Accordingly, it would be desirable to provide systems and methods with such capabilities.

## SUMMARY OF THE INVENTION

Above mentioned problems are solved by the appended claims.

According to an embodiment, there is a least-square migration, LSM, based method for generating a 4D image of a subsurface and the method includes receiving seismic data $d$ related to the subsurface, where the seismic data $d$ includes a baseline dataset $d_B$ and a monitor dataset $d_M$, with the monitor dataset $d_M$ being taken later in time than the baseline dataset $d_B$, for the same subsurface, calculating a baseline filter $\mathcal{F}_B$ and a monitor filter $\mathcal{F}_M$ based on a same common reflectivity r of the subsurface and corresponding remigrated baseline data $m_{B1}$ and remigrated monitor data $m_{M1}$ so that the base filter $\mathcal{F}_B$ applied to the remigrated baseline data $m_{B1}$ equals the monitor filter $\mathcal{F}_M$ applied to the remigrated monitor data $m_{M1}$, applying the baseline filter $\mathcal{F}_B$ to raw migrated baseline data $m_{B0}$ and applying the monitor filter $\mathcal{F}_M$ to raw migrated monitor data $m_{M0}$ to generate LSM baseline data $m_B$ and LSM monitor data $m_M$, and generating the 4D image of the subsurface based on the LSM baseline data $m_B$ and the LSM monitor data $m_M$.

According to another embodiment, there is a computing device for generating a 4D image of a subsurface based on a least-square migration, LSM, based method, and the computing device includes an interface for receiving seismic data $d$ related to the subsurface, wherein the seismic data $d$ includes a baseline dataset $d_B$ and a monitor dataset $d_M$, with the monitor dataset $d_M$ being taken later in time then the baseline dataset $d_B$, for the same subsurface and a processor connected to the interface. The processor is configured to calculate a baseline filter $\mathcal{F}_B$ and a monitor filter $\mathcal{F}_M$ based on a same common reflectivity $r$ of the subsurface and corresponding remigrated baseline data $m_{B1}$ and remigrated monitor data $m_{M1}$ so that the base filter $\mathcal{F}_B$ applied to the remigrated baseline data $m_{B1}$ equals the monitor filter $\mathcal{F}_M$ applied to the remigrated monitor data $m_{M1}$, apply the baseline filter $\mathcal{F}_B$ to raw migrated baseline data $m_{B0}$ and applying the monitor filter $\mathcal{F}_M$ to raw migrated monitor data $m_{M0}$ to generate LSM baseline data $m_B$ and LSM monitor data $m_M$, and generate the 4D image of the subsurface based on the LSM baseline data $m_B$ and the LSM monitor data $m_M$.

## BRIEF DESCRIPTION OF THE DRAWINGS

For a more complete understanding of the present invention, reference is now made to the following descriptions taken in conjunction with the accompanying drawings, in which:

FIG. 1 is a flow chart of a method for generating an image of a subsurface based on single iteration LSM using distinct filters for a baseline dataset and a monitor dataset;

FIG. 2 schematically illustrates a geological formation located into a subsurface and how a source probes the formation with seismic waves;

FIGs. 3A and 3B illustrate seismic data corresponding to two different vintages for a same subsurface;

FIG. 4A illustrates the image differences between a traditional imaging method and a traditional LSM method, FIG. 4B illustrates the image difference between the traditional imaging method and the constrained LSM method, and FIG. 4C shows the image differences between the traditional LSM method and the constrained LSM method;

FIG. 5 is another flow chart of a method for generating an image of the subsurface based on single iteration LSM using filters for both a baseline dataset and a monitor dataset;

FIG. 6 is a flow chart of a method for generating an image of the subsurface based on plural iterations LSM using filters for preconditioning descent directions used to update a velocity model; and

FIG. 7 is a schematic diagram of a data computing system for generating an image of the subsurface based on LSM using filters.

## DETAILED DESCRIPTION OF THE INVENTION

The following description of the embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to a single iteration time-lapse LSM method for processing the 4D data for generating an image of the subsurface. However, the embodiments to be discussed next are not limited to a single iteration LSM or to generating an image of the subsurface, but may be applied to plural iteration methods and/or for generating other data from the seismic data.

The methods discussed herein may be applied to the field of subsurface exploration, for example, hydrocarbon exploration and development, geothermal exploration and development, and carbon capture and sequestration, or other natural resource exploration and exploitation. They could also be employed for surveying and monitoring for windfarm applications, both onshore and offshore, and also for medical imaging applications.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

To circumvent the problems associated with the existing LSM methods, single iteration methods based on approximating the inverse Hessian with non-stationary filters have been proposed [7, 8]. The LSM method, as solved by [7], is posed in a least squares sense by minimizing a cost function $C(m)$, which is given by the following equation:

$$C(m) = \|d - Lm\|^2, \qquad (3)$$

where $d$ is the recorded seismic data, $L$ is the demigration 'modelling' operator and $m$ is the reflectivity, and $Lm$ is the simulated data. In this problem, $d$ and $L$ are known and $m$ is calculated. The least squares solution to this problem is given by equation (2) discussed above.

The main difficulty in solving equation (2) is in the evaluation of the operator $(L^T L)^{-1}$, which is the inverse of the Hessian. The second part of equation (2) is the raw migrated image $m_0 = L^T d$.

The author in [4] proposed to estimate the operator $(L^T t)^{-1}$ (the inverse of the Hessian) by creating another image realization $m_1$ by applying the demigration operator $L$ and the re-migration operator $L^T$, that is:

$$m_1 = (L^T L)L^T d. \qquad (4)$$

In other words, this method calculates the re-migration $m_1 = L^T L m_0$ by de-migrating $m_0$ with operator $L$ and then migrating the result of the de-migration step with operator $L^T$, thus relating to the raw migration $m_0$ through the Hessian matrix $L^T L$. A matching filter $\mathcal{F}$ between the two image realizations $m_0$ and $m_1$ is calculated using the following equation:

$$D(\mathcal{F}) = argmin_{\mathcal{F}} \|m_0 - \mathcal{F} * m_1\|, \qquad (5)$$

where $D(\mathcal{F})$ is a cost function to be minimized, $\mathcal{F}$ is the matching filter (it has many components) derived by matching the two realizations $m_0$ and $m_1$, and '$*$' denotes a convolution.

The filter $\mathcal{F}$ then approximates the inverse of the Hessian operator $(L^T L)^{-1}$ i.e.,

$$\mathcal{F}(m_1) \approx m_0, \quad (6)$$

or

$$\mathcal{F} \approx (L^T L)^{-1}. \quad (7)$$

Filter $\mathcal{F}$ is then applied to the raw reflectivity $m_0$, which results in the following approximation of equation (2), i.e., the LSM is approximated by:

$$m = (L^T L)^{-1} L^T d \approx \mathcal{F} * L^T d = \mathcal{F}(m_0). \quad (8)$$

As discussed above, this approach may leave enough imprint of the acquisition and, in the context of 4D imaging, if there is not repeatability between the baseline and monitor acquisition geometries, this can destroy the 4D signal.

According to an embodiment, a method that achieves repeatability between the baseline and monitor acquisitions, which is based on the non-stationary filter $\mathcal{F}$ is now discussed. Subscripts B and M are introduced to label the baseline and monitor related data, filters, and operators, respectively. The LSM approach discussed above, when applied for each survey dataset, satisfies the relationships:

$$m_B = (L_B^T L_B)^{-1} m_{B0}, \qquad m_M = (L_M^T L_M)^{-1} m_{M0}, \qquad (9)$$

where

$$m_{B0} = L_B^T d_B, \qquad m_{M0} = L_M^T d_M. \quad (10)$$

For computing the re-migrations $m_{B1}$ and $m_{M1}$, instead of de-migrating each raw migration $m_{B0}$ and $m_{M0}$, according to this embodiment, a common reflectivity $r$ is used. This common reflectivity $r$ acts as a constraint on the LSM method [11]. The common reflectivity r can be estimated/selected based on the experience of the operator running the simulation for best describing the subsurface of interest. In one application, the common reflectivity r is calculated based on the data from a previous seismic survey. In yet another application, the common reflectivity r is calculated, based on other methods, either from the baseline data or the monitor dataset. Any known method for calculating the reflectivity may be used.

In this case, the re-migrations are given by:

$$m_{B1} = L_B^T L_B r, \qquad m_{M1} = L_M^T L_M r. \quad (11)$$

Similar to the independent LSM method discussed above with regard to equations (1-8), filters $\mathcal{F}_B$ and $\mathcal{F}_M$, for each of the baseline and monitor datasets are calculated. The filters $\mathcal{F}_B$ and $\mathcal{F}_M$ are constructed so that each of them satisfies a corresponding relationship:

$$\mathcal{F}_B(m_{B1}) \approx r, \qquad \mathcal{F}_M(m_{M1}) \approx r, \quad (12)$$

such that each filter approximates the respective inverse Hessian matrix. These filters can be computed in any domain, by applying a linear transform on (1) the reflectivity and (2) the re-migrations before the filter computation.

For example, in one application, a curvelet transformation $\mathcal{C}$, which is a linear transform from the image domain is used. Other transformations may be used, as discussed later. This transform is named herein a "filter transform" because the filter is calculated in this domain, which is different from the image domain and the data domain. The corresponding domain may be called "filter domain." Following the approach in [8], the image is decomposed in the curvelet domain (based on [9]), where the seismic events are decomposed in wavenumber scales and dips, allowing for better illumination compensation for different components of the data. In this domain (i.e., a curvelet domain), a filter f is sought that minimizes the cost-function

$$\|\mathcal{C}(m_0) - f\mathcal{C}(m_1)\|^2 + \alpha^2 \|f\|^2. \quad (13)$$

A direct solution to this equation is given by:

$$f = \frac{\mathcal{C}(m_0)\mathcal{C}(m_1)^*}{|\mathcal{C}(m_1)|^2 + \alpha^2}. \qquad (14)$$

Then, the solution for the single iteration LSM method is given by:

$$\mathcal{F}(m_0) = \mathcal{C}^{-1}\big(f\mathcal{C}(m_0)\big). \qquad (15)$$

Note that equation (15) indicates that the transform $\mathcal{C}$ effectively transforms the raw migration data $m_0$ to the curvelet domain, performs the filtering $f$ in that domain, and then transforms the results back into the image domain with the inverse curvelet transform $\mathcal{C}^{-1}$. While this embodiment transformed the data (raw migration data) from the image domain to the curvelet domain, it is possible to use other domains for applying the filter. In this regard, note that the term "image domain" is used in this context to refer to the transformed representation of subsurface structures and geological features that result from the application of migration algorithms $L^T$ to the seismic data d. These algorithms aim to create accurate and interpretable images of the subsurface. Some examples of image domains used in seismic imaging, that are appropriate for this embodiment include:

Time-Migrated Image Domain: This is a common type of image domain where the seismic data are processed in the time domain. It involves positioning the seismic reflections at their correct time positions in the subsurface, creating an image that represents the depth at which geological features are located. Time-migrated images are widely used for structural interpretation and subsurface mapping.

Depth-Migrated Image Domain: Depth migration transforms seismic data from the time domain to the depth domain. It accurately positions seismic reflections at their correct spatial depths in the subsurface. Depth-migrated images are valuable for understanding the three-dimensional geometry of subsurface structures.

Common-Offset Gather Image Domain: In some cases, pre-stack gathers (common-offset gathers) are transformed into an image domain. This can involve stacking seismic traces at each offset to enhance signal-to-noise ratio and improve resolution.

Common-Azimuth (Angle) Gather Image Domain: In areas with complex subsurface geometries, images can be transformed into common-azimuth (angle) gather domains. This type of imaging helps reveal the directional variation of subsurface features and is important for understanding anisotropy effects.

Amplitude-Preserved Image Domain: Some migration algorithms aim to preserve the amplitude information of seismic reflections, resulting in images that accurately represent the subsurface reflectivity and potential reservoir properties.

Anisotropic Image Domain: Anisotropic migration takes into account the directional dependence of seismic wave propagation in anisotropic media. The resulting images account for the varying velocities and complexities introduced by anisotropy.

Amplitude-Versus-Offset (AVO) Image Domain: AVO inversion and imaging techniques transform seismic data to highlight the variations in seismic amplitudes with offset, providing insights into subsurface fluid content, lithology, and other reservoir properties.

Multi-Dimensional Image Domain: Seismic images can be presented in multi-dimensional forms, incorporating attributes beyond just amplitude and time or depth. These attributes might include attributes derived from seismic inversion or other advanced processing techniques.

Each of these image domains serves a specific purpose and can provide unique insights into the subsurface. The choice of image domain depends on the geological setting, the goals of the study, and the specific challenges posed by the seismic data and subsurface conditions.

The curvelet transform noted with regard to equations (13-15) is a mathematical technique used in seismic imaging, and image processing in general, where data is often characterized by curves and edges at various scales and orientations. It is an extension of the wavelet transform, designed to capture highly directional and anisotropic features in data. In the context of seismic imaging, the curvelet transform is employed to analyze seismic data in a way that efficiently represents features of subsurface structures. Seismic data often contains information about subsurface layers, faults, and other geological features that have different orientations and scales. The curvelet transform excels at capturing these features by using a multiscale and multidirectional decomposition approach.

While other transforms may be used, for example, Fourier transform, ridgelet, contourlet, seislet, linear Radon, parabolic Radon, hyperbolic Radon, shifted-hyperbolic Radon, wavelet, complex wavelet, etc., some of which are described in Yilmaz, Öz (2001), "Seismic data analysis," Society of Exploration Geophysicists, ISBN 1-56080-094-1, the curvelet transform has the following advantages.

Multiscale Decomposition: Similar to the wavelet transform, the curvelet transform decomposes data into different scales (frequencies). However, it goes beyond this by also considering different directions. This allows the transform to capture features that are not aligned with the standard horizontal and vertical orientations.

Directional Sensitivity: The curvelet transform is particularly effective at capturing features with directional information, which is desired in seismic imaging. Geological structures often exhibit directional patterns, such as faults, fractures, and layer boundaries. The curvelet transform can represent these features more accurately than traditional transforms.

Sparse Representation: The curvelet transform produces a sparse representation of data, meaning that only a few coefficients are significant while the rest are close to zero. This can greatly reduce the amount of data needed to represent complex features accurately, leading to more efficient storage and processing.

Anisotropic Features: The curvelet transform is well-suited for detecting and representing anisotropic features, which are features that exhibit different properties in different directions. Seismic data often contains such anisotropic features due to the varied orientations of subsurface structures.

Returning to equation (12), the two filters $\mathcal{F}_B$ and $\mathcal{F}_M$ are required to satisfy the relation:

$$\mathcal{F}_B(m_{B1}) = \mathcal{F}_M(m_{M1}), \quad (16)$$

which ensures consistency between both filters. With this constraint, the null space of the baseline Hessian $L_B^T L_B$ is captured in the monitor filter $\mathcal{F}_M$ and vice-versa. The null space (also known as the kernel) of a matrix or a linear transformation is the set of all vectors in the domain that are mapped to the zero vector in the codomain. In other words, it is the set of solutions to the homogeneous equation $Ax = 0$, where A is a given matrix and $x$ is a vector of variables.

Thus, the resulting 4D LSM migrated data is described by:

$$m_B \approx \mathcal{F}_B(m_{B0}), \qquad m_M \approx \mathcal{F}_M(m_{M0}) \quad (17)$$

The two filters $\mathcal{F}_B$ and $\mathcal{F}_M$ are joint filters because they satisfy relationship (16), which relates the two filters to each other. A method for calculating the joint filters is now illustrated. Because of equation (16), the method seeks to minimize the following cost function for two filters $f_B$ and $f_M$ (in the curvelet space in this instance):

$$\|\mathcal{C}(r) - f_B\mathcal{C}(m_{1B})\|^2 + \alpha_B^2\|f_B\|^2 + \|\mathcal{C}(r) - f_M\mathcal{C}(m_{1M})\|^2 + \alpha_M^2\|f_M\|^2$$

$$- (\langle \lambda, f_B\mathcal{C}(m_{1B}) - f_M\mathcal{C}(m_{1M}) \rangle + c.c). \quad (18)$$

The first two terms in equation (18) are the independent minimization of the baseline and monitor filters, respectively, corresponding to equation (15). The third term in equation (18) is coupling the constraint of equation (16) imposed by the Lagrange multiplier $\lambda$. The solution to equation (18) is given by:

$$f_B = \frac{2|\mathcal{C}(m_{1M})|^2\mathcal{C}(m_{1B})^*\mathcal{C}(r)}{2|\mathcal{C}(m_{1B})|^2|\mathcal{C}(m_{1M})|^2 + \alpha_B^2|\mathcal{C}(m_{1M})|^2 + \alpha_M^2|\mathcal{C}(m_{1B})|^2},$$

$$f_M = \frac{|\mathcal{C}(m_{1B})|^2\mathcal{C}(m_{1M})^*\mathcal{C}(r)}{2|\mathcal{C}(m_{1B})|^2|\mathcal{C}(m_{1M})|^2 + \alpha_B^2|\mathcal{C}(m_{1M})|^2 + \alpha_M^2|\mathcal{C}(m_{1B})|^2}. \quad (19)$$

The above solutions can be contrasted with those obtained through independent evaluations of the filters, $f_B^0$ and $f_M^0$ as in equation (14):

$$f_B^0 = \frac{\mathcal{C}(r)\mathcal{C}(m_{1B})^*}{|\mathcal{C}(m_{1B})|^2 + \alpha_B^2}, \qquad f_M^0 = \frac{\mathcal{C}(r)\mathcal{C}(m_{1M})^*}{|\mathcal{C}(m_{1M})|^2 + \alpha_M^2}. \quad (20)$$

It is worth noticing a relation between these solutions:

$$f_B = \frac{\mathrm{HM}\big(f_B^0 \mathcal{C}(m_{1B}), f_M^0 \mathcal{C}(m_{1M})\big)}{\mathcal{C}(m_{1B})}, \qquad f_M = \frac{\mathrm{HM}\big(f_B^0 \mathcal{C}(m_{1B}), f_M^0 \mathcal{C}(m_{1M})\big)}{\mathcal{C}(m_{1M})}, \qquad (21)$$

where $\mathrm{HM}(x_1, x_2)$ is the harmonic mean of $x_1$ and $x_2$. This leads to a generic formula for obtained the joint filters based on any generalized mean. In particular, for the Lehmer mean $L_p$ [10]:

$$f_B = \frac{L_p\big(f_B^0 \mathcal{C}(m_{1B}), f_M^0 \mathcal{C}(m_{1M})\big)}{\mathcal{C}(m_{1B})}, \qquad f_M = \frac{L_p\big(f_B^0 \mathcal{C}(m_{1B}), f_M^0 \mathcal{C}(m_{1M})\big)}{\mathcal{C}(m_{1M})}. \qquad (22)$$

Here p is a free parameter. Special cases are p = 0 for the harmonic mean, p = 0,5 for the geometric mean and p = 1 for the arithmetic mean.

Then, the solution for the 4D single iteration LSM is

$$\mathcal{F}_B(m_{0B}) = \mathcal{C}^{-1}\big(f_B \mathcal{C}(m_{0B})\big), \qquad \mathcal{F}_M(m_{0M}) = \mathcal{C}^{-1}\big(f_M \mathcal{C}(m_{0M})\big), \quad (23)$$

which is expressed in the image domain due to the inverse curvelet transform $\mathcal{C}^{-1}$.

Having the LSM data, it is then possible to generate an image of the subsurface, to visualize changes in the reservoir associated with the baseline and monitor datasets, i.e., the 4D data. In one embodiment, the output of the migration process is the subsurface image that represents the geological structures, faults, and other features. This image is typically displayed in a 2D or 3D format, where the vertical axis represents depth or time, and the horizontal axes correspond to spatial coordinates. This image is used by those skilled in the art of image interpretation, for example, geophysicists and/or geologists, to identify potential subsurface reservoirs, geological structures, and other features that might indicate the presence of hydrocarbons, minerals, or other valuable resources.

The method discussed herein may be applied in any pre-stack domain common to both baseline and monitor datasets. In seismic analysis, the pre-stack domain refers to the stage of data processing and analysis where seismic data is manipulated and interpreted before it is stacked. This domain retains the individual seismic traces acquired at various source-receiver offsets and angles, allowing for more detailed and accurate subsurface imaging and interpretation. Working in the pre-stack domain is particularly useful in areas with complex geological structures, anisotropic media, or when performing advanced analysis techniques.

For a pre-stack application, let i label an instance of such dataset in a given domain. The joint filters are computed separately for each i, but all using the same reflectivity r:

$$\mathcal{F}_B^i\big(m_{B1}^i\big) \approx r, \qquad \mathcal{F}_M^i\big(m_{M1}^i\big) \approx r, \qquad \mathcal{F}_B^i\big(m_{B1}^i\big) = \mathcal{F}_M^i\big(m_{M1}^i\big), \quad (24)$$

where the re-migrations are given by:

$$m_{B1}^i = L_B^{i\,T} L_B^i r, \qquad m_{M1}^i = L_M^{i\,T} L_M^i r. \quad (25)$$

The 4D pre-stack LSM are then given by:

$$m_B^i \approx \mathcal{F}_B^i\big(L_B^{i\,T} d_B\big), \qquad m_M^i \approx \mathcal{F}_M^i\big(L_M^{i\,T} d_M\big). \quad (26)$$

This approach can also be applied for 3D pre-stack LSM. For example, for a single vintage, all pre-stack remigrations are performed with the same reflectivity r. If there are n instances of the pre-stack domain, it is possible to compute joint filters satisfying:

$$\mathcal{F}_B^i\big(m_{B1}^i\big) \approx r, \quad \mathcal{F}_B^i\big(m_{B1}^i\big) = \mathcal{F}_B^j\big(m_{B1}^j\big), \qquad i,j = 1\,to\,n. \quad (27)$$

It is worth noting that in some 4D projects, more than two surveys, i.e., vintages, can be considered. The method discussed above can be extended and it applies naturally to such situations, by generalizing the conditions from equations (16) and (17), i.e.,

$$\mathcal{F}_i(m_{i1}) = \mathcal{F}_j(m_{j1}), \qquad i,j = 1\ to\ n, \quad (28)$$

$$m_i \approx \mathcal{F}_i(m_{i0}) \quad (29)$$

where $i$ and $j$ represent different seismic surveys i.e., different 4D vintages, and $n$ is the number of surveys under consideration. Expressions for the filters in the filter domain can be found through the generalized Lehmer mean formulation of equation (22).

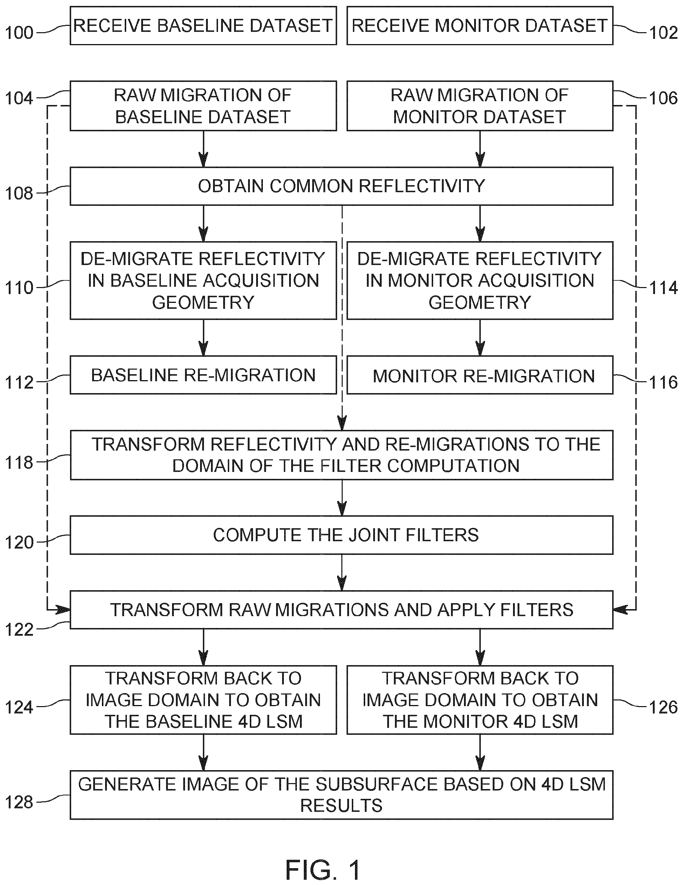

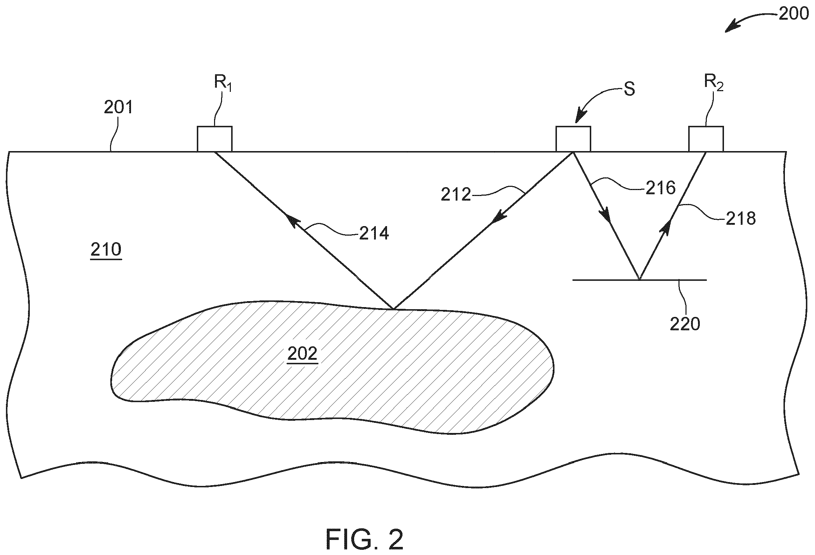

The method of single iteration, time-lapse LSM discussed above can be summarized as now discussed with regard to FIGs. 1 and 2. Note that this method does not use multiple iterations, as other methods do, but uses a single iteration for migrating the data using the filters discussed above. The method starts in step 100 with receiving seismic data $d_B$ associated with a first seismic survey, the baseline survey, and a step 102 of receiving seismic data $d_M$ associated with a second seismic survey, the monitor survey, as illustrated in FIG. 1. The two seismic surveys acquire seismic data over a same subsurface 210, as illustrated in FIG. 2, but at different times, for monitoring a reservoir or formation 202. FIG. 2 shows a land seismic survey in which a source S emits seismic energy into the subsurface. A wavefield 212 is shown propagating toward the reservoir 202 and then being reflected, and the reflected wavefield 214 is recorded by a corresponding seismic sensor R1. The source S may be any type of seismic source, examples include airgun, pinger, sparker, boomer, marine vibrator, land vibrator, dynamite, etc. The source may be a single source (e.g., single airgun) or an array of sources (e.g., airgun array). The seismic sensor may be one of hydrophones, geophones, particle motion sensors, particle velocity sensors, accelerometers, near-field hydrophones, near-field accelerometers or other sensor configured to detect seismic energy. The data may be from towed streamer, ocean-bottom sensor, OBS, (node or cable) acquisition, land acquisition, transition zone campaign, or borehole (e.g., vertical seismic profile (VSP), distributed acoustic sensing (DAS)).

FIG. 2 further shows another wavefield 216 that is reflected from an interface 220 between layers having different impedances, and the reflected wavefield 218 is recorded by another sensor R2, or by the first sensor R1. The seismic acquisition system 200 is shown in FIG. 2 being a land system, located on the surface 201 of the earth. However, the system 200 may be a marine system or any other system used in the field. The system 200 may include plural sources S and plural sensors Ri, with i taking a value up to tens of thousands.

The seismic data $d_B$ and $d_M$ are then migrated with the migration operator $L_B^T$ and $L_M^T$, respectively, in steps 104 and 106, for obtaining the raw migrated data $m_{B0}$ and $m_{M0}$, respectively. In step 108, the reflectivity $r$ of the subsurface is obtained, as previously discussed, either from a preexisting survey, or from being estimated by the operator of the method, based on prior knowledge, and the details of the subsurface. In step 110, the reflectivity $r$ is demigrated (i.e., operation $L_B r$ is performed) for the baseline dataset, i.e., for the baseline acquisition geometry, based on equation (11), and in step 112 the results of step 110 are remigrated (i.e., operator $L_B^T$ is applied). This means that steps 110 and 112 are equivalent to operation $L_B^T L_B r$, which results in calculating the remigration data $m_{B1}$ for the baseline dataset. Similar steps are performed for the monitor dataset, i.e., in step 114, the same reflectivity $r$ as in step 110 is demigrated (i.e., operation $L_M r$ is performed) for the monitor dataset (for the baseline acquisition geometry), based on equation (11), and in step 116 the results of step 114 are re-migrated (i.e., operator $L_M^T$ is applied). This means that steps 114 and 116 are equivalent to operation $L_M^T L_M r$, which results in calculating the remigration data $m_{M1}$ for the monitor dataset. Note that steps 110 and 112 and steps 114 and 116 are performed independent of each other. This means that these steps may be performed in parallel or in series.

As various domains are used for processing the data for the method illustrated in FIG. 1, it is noted that steps 100 and 102 are performed in the data domain (e.g., space-time domain), steps 104, 106 and 108 are performed in the image domain, steps 110 and 114 are performed in the data domain, and steps 112 and 116 are performed in the image domain.

Next, the method transforms in step 118 the reflectivity $r$ (from step 108) and the remigration data $m_{B1}$ and $m_{M1}$ from steps 112 and 116 into the filter domain (for example, a curvelet domain using a curvelet transform, as described by equation (18)). Then, the joint filters $\mathcal{F}_B$ and $\mathcal{F}_M$ are calculated in step 120, in the filter domain, based on equations (19) and (20). In step 122, the raw migrations from steps 104 and 106 are transformed into the filter domain and the calculated filters $\mathcal{F}_B$ and $\mathcal{F}_M$ are applied to calculate LSM migration data $m_B \approx F_B(m_{B0})$ and $m_M \approx \mathcal{F}_M(m_{M0})$. In step 124, the baseline LSM migration data $m_B$ is transformed back to the image domain and in step 126, the monitor LSM migration data $m_M$ is also transformed back to the image domain. Based on the LSM migration data $m_B$ and $m_M$, the method generates in step 128 an image of the subsurface, which might identify the reservoir 202, so that the user of the image can decide, if necessary, where to drill a new well, where to focus the production effort, etc.

The term "image" has a broader meaning than a two-dimensional grid of pixel values, being rather a 3-dimensional map of one or more attribute values. The most frequently mapped attribute is seismic wave propagation velocity. The attribute values characterize (and thus allow identification of) different material volumes inside the subsurface and therefore enable estimation of the location and shape of interfaces between different materials. While this profile/image does not provide an accurate location for natural resources such as (but not limited to) oil and/or gas, it enables those trained in the field to determine the presence or absence thereof.

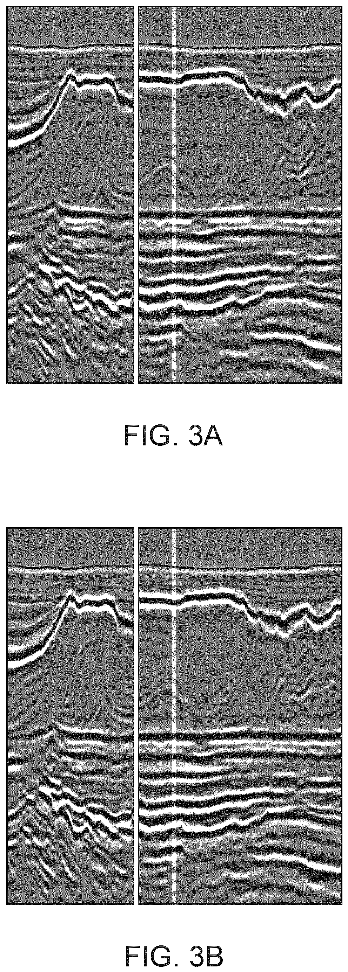

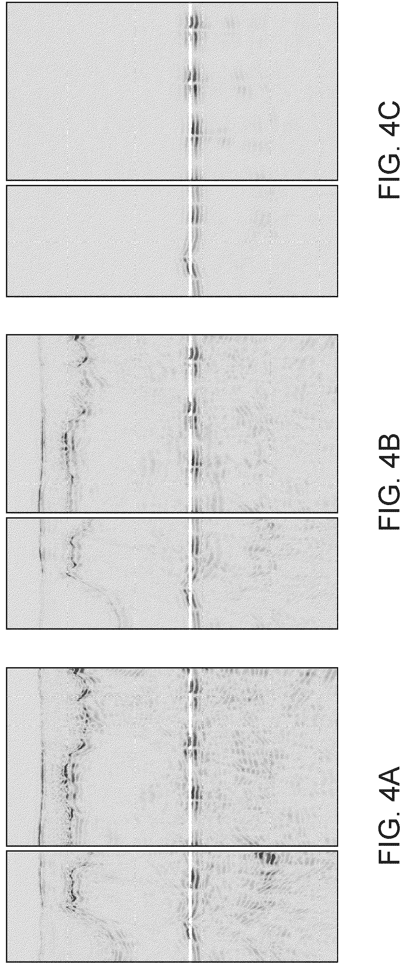

The method discussed above with regard to FIG. 2 has been tested on the synthetic data illustrated in FIGs. 3A and 3B. FIG. 3A shows the seismic data of a first vintage for a given subsurface and FIG. 3B shows the seismic data for a second vintage for the same subsurface. FIG. 4A illustrates the image differences between the traditional LSM method and the image of the subsurface obtained with a traditional process, and FIG. 4B illustrates the image differences between the constrained LSM of FIG. 2 and the traditional image. FIG. 4C shows the true differences between the images shown in FIGs. 4A and 4B. One skilled in the art would recognize that the image generated by the constraint LSM of FIG. 2 is superior to the traditional LSM method.

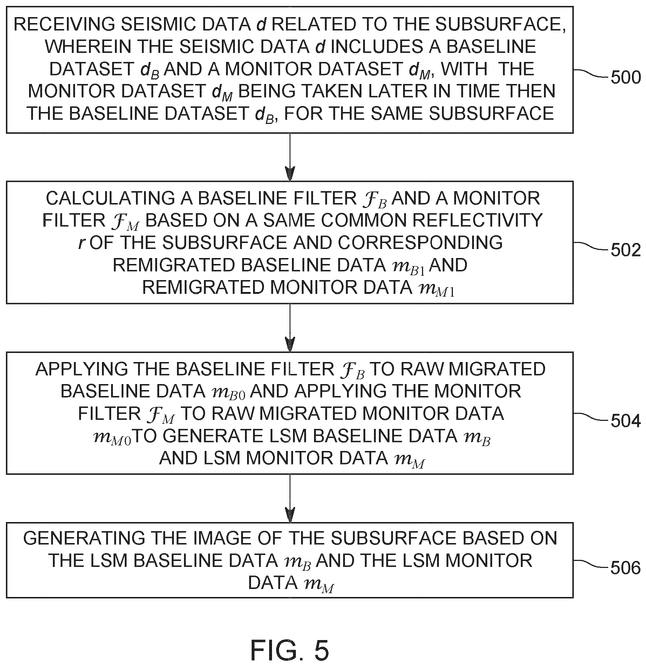

An LSM based method with constraint for generating an image of a subsurface is schematically illustrated in FIG. 5 and includes a step 500 of receiving seismic data d related to the subsurface, wherein the seismic data d includes a baseline dataset $d_B$ and a monitor dataset $d_M$, with the monitor dataset $d_M$ being taken later in time then the baseline dataset $d_B$, for the same subsurface, a step 502 of calculating a baseline filter $\mathcal{F}_B$ and a monitor filter $\mathcal{F}_M$ based on a same common reflectivity $r$ of the subsurface and corresponding remigrated baseline data $m_{B1}$ and remigrated monitor data $m_{M1}$, a step 504 of applying the baseline filter $\mathcal{F}_B$ to raw migrated baseline data $m_{B0}$ and applying the monitor filter $\mathcal{F}_M$ to raw migrated monitor data $m_{M0}$ to generate LSM baseline data $m_B$ and LSM monitor data $m_M$, and a step 506 of generating the image of the subsurface based on the LSM baseline data $m_B$ and the LSM monitor data $m_M$.

The step of calculating may include performing raw migration, with a baseline migration operator $L_B^T$ on the baseline dataset $d_B$ and with a monitor migration operator $L_M^T$ on the monitor dataset $d_M$, to calculate the monitor raw migrated data $m_{B0}$ and the baseline raw migrated data $m_{M0}$. This step may further include calculating the remigrated baseline data $m_{B1}$ by applying a baseline demigration operator $L_B$ on the reflectivity $r$, followed by applying the baseline migration operator $L_B^T$ so that the remigrated baseline data $m_{B1} = L_B^T L_B r$, and calculating the remigrated monitor data $m_{M1}$ by applying a monitor demigration operator $L_M$ on the reflectivity r, followed by applying the monitor migration operator $L_M^T$ so that the remigrated monitor data $m_{M1} = L_M^T L_M r$. In one application, the step may further include transforming the reflectivity $r$ with a filter transform $\mathcal{C}$, from an image domain to a filter domain, transforming the remigrated baseline data $m_{B1}$ with the filter transform $\mathcal{C}$, from the image domain to the filter domain, and transforming the remigrated monitor data $m_{M1}$ with the filter transform $\mathcal{C}$, from the image domain to the filter domain. In addition, the step of calculating may also include computing a baseline filter $f_B$ in the filter domain based on a filter domain representation $C(r)$ of the reflectivity r, a filter domain representation $\mathcal{C}(m_{B1})$ of the remigrated baseline data $m_{B1}$, and a filter domain representation $\mathcal{C}(m_{M1})$ of the remigrated monitor data $m_{M1}$, and computing a monitor filter $f_M$ in the filter domain based on the filter domain representation $C(r)$ of the reflectivity r, the filter domain representation $\mathcal{C}(m_{B1})$ of the remigrated baseline data $m_{B1}$, and the filter domain representation $\mathcal{C}(m_{M1})$ of the remigrated monitor data $m_{M1}$.

In one application, the filter transform $\mathcal{C}$ is a curvelet transform and the filter domain is a curvelet domain. The method may further include subjecting the baseline filter $f_B$ in the filter domain and the monitor filter $f_M$ in the filter domain to produce a same result when applied to the remigrated baseline data $m_{B1}$ and to remigrated monitor data $m_{M1}$, respectively, and/or transforming (1) the raw migrated baseline data $m_{B0}$ to transformed raw migrated baseline data $\mathcal{C}(m_{B0})$ and (2) the raw migrated monitor data $m_{M0}$ to transformed raw migrated monitor data $\mathcal{C}(m_{M0})$ in the filter domain with the filter transform $\mathcal{C}$. The step of applying may include applying the baseline filter $f_B$ in the filter domain, to the transformed raw migrated baseline data $\mathcal{C}(m_{B0})$, and applying the monitor filter $f_M$ in the filter domain, to the transformed raw migrated monitor data $\mathcal{C}(m_{M0})$, to generate the LSM baseline data $f_B \mathcal{C}(m_B)$ in the filter domain and the LSM monitor data $f_M \mathcal{C}(m_M)$

in the filter domain, and transforming back, with an inverse transform $C^{-1}$, (1) the LSM baseline data $f_B C (m_B)$ to obtain the LSM baseline data $m_B = C^{-1}(f_B C (m_B))$ and (2) the LSM monitor data $f_M C (m_M)$ to obtain the LSM monitor data $m_M = C^{-1}(f_M C (m_{M0}))$. The inverse transform $C^{-1}$ takes a quantity from the curvelet domain to the image domain.

The above method is performed by doing a single iteration LSM approach. However, it is possible to use multiple iterations for the LSM method. If multiple iterations are used, then the steps of determining the filters $\mathcal{F}_B$ and $\mathcal{F}_M$ may be adapted to be used as a preconditioning for iterative LSM. For example, at the k-th iteration of the method, the descent directions

$$g_B^{(k)} = L_B^T \left( d_B - L_B m_B^{(k)} \right), \qquad g_M^{(k)} = L_M^T \left( d_M - L_M m_M^{(k)} \right) \quad (30)$$

can be preconditioned by the joint filters $\mathcal{F}_B$ and $\mathcal{F}_M$ before computing the updates for the reflectivities.

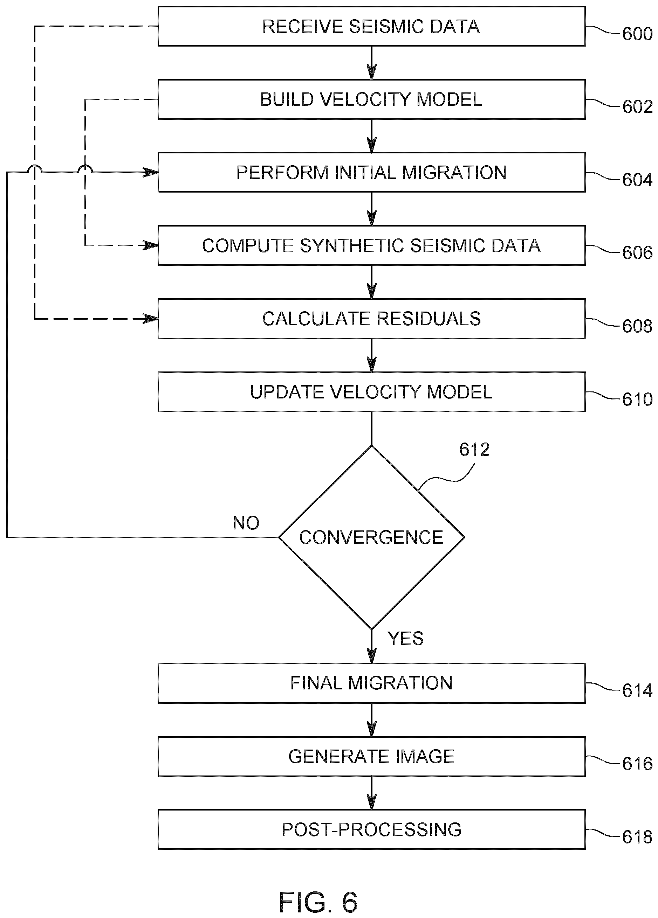

The iterative LSM aims to improve the accuracy of seismic images by iteratively updating the migrated image to minimize the difference between the observed seismic data and the modeled data. According to this approach, and as illustrated in FIG. 6, the method receives in step 600 the seismic data for data preprocessing. Similar to steps 100 and 102, the method may receive the data from baseline and monitor surveys. Preprocessing the raw seismic data may include shot gathers and receiver gathers, removing noise, correcting for static corrections, and performing data conditioning. In step 602, the method builds the velocity model. A preliminary velocity model of the subsurface is either inputted by the user, based on the knowledge of the surveyed subsurface, e.g., using well logs, seismic tomography, or other available geological and geophysical information, or is randomly initiated. In step 604 an initial migration is performed using the initial velocity model to create an initial subsurface image. Next, in step 606, forward modeling is performed, i.e., using the initial migrated image and the initial velocity model, and the method computes synthetic seismic data (modeled data) through the process of forward modeling. This involves simulating how seismic waves would propagate through the subsurface based on the given velocity model. In step 408, the method computes the residuals, i.e., calculates the residuals by subtracting the observed seismic data from the modeled data. Residuals represent the differences between the actual recorded data and the data predicted by the initial migration. In this step, the method may also calculate the gradient of the objective function (misfit) with respect to the velocity model parameters. The gradient points in the direction of the steepest increase in the objective function. In the context of optimization, taking the negative of the gradient gives the direction of steepest decrease (descent direction).

In step 610, the velocity model is iteratively updated, in the direction of the descent direction (see equations (30)), using, for example, inversion techniques, to minimize the misfit between the observed data and the modeled data. By iteratively following the descent direction provided by the negative gradient, the optimization algorithm seeks to find the subsurface velocity model that best fits the observed seismic data. Convergence occurs when the algorithm reaches a point where further adjustments in the velocity model do not lead to significant reductions in the misfit. This step involves solving an optimization problem to update the velocity model parameters. Steps 604 to 610 are then reiterated by performing migration using the updated velocity model, generating new modeled data, computing residuals, and updating the velocity model until convergence is achieved or a predefined stopping criterion is met in step 612. Once convergence is achieved or the iterative process is completed in step 612, the method performs a final migration step 614 using the refined velocity model, to generate in step 616 an improved subsurface image. In an optional step 618, the method may apply additional postprocessing steps to the final migrated image, such as amplitude scaling, noise suppression, and edge enhancement, to improve the interpretability of the subsurface features. In one application, instead of updating the velocity model, the least square migration baseline data $m_B$ and the updated least square migration monitor data $m_M$ are updated in the above steps.

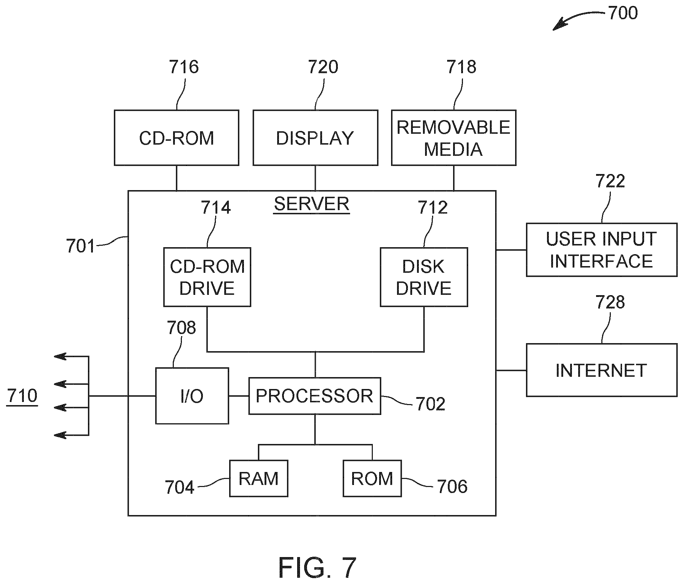

The above-discussed procedures and methods may be implemented in a computing device as illustrated in FIG. 7. Hardware, firmware, software or a combination thereof may be used to perform the various steps and operations described herein. The computing device 700 is suitable for performing the activities described in the above embodiments and may include a server 701. Such a server 701 may include a central processor (CPU) 702 coupled to a random access memory (RAM) 704 and to a read-only memory (ROM) 706. ROM 706 may also be other types of storage media to store programs, such as programmable ROM (PROM), erasable PROM (EPROM), etc. Processor 702 may communicate with other internal and external components through input/output (I/O) circuitry 708 and bussing 710 to provide control signals and the like. Processor 702 carries out a variety of functions as are known in the art, as dictated by software and/or firmware instructions.

Server 701 may also include one or more data storage devices, including hard drives 712, CD-ROM drives 714 and other hardware capable of reading and/or storing information, such as DVD, etc. In one embodiment, software for carrying out the above-discussed steps may be stored and distributed on a CD-ROM or DVD 716, a USB storage device 718 or other form of media capable of portably storing information. These storage media may be inserted into, and read by, devices such as CD-ROM drive 714, disk drive 712, etc. Server 701 may be coupled to a display 720, which may be any type of known display or presentation screen, such as LCD, plasma display, cathode ray tube (CRT), etc. A user input interface 722 is provided, including one or more user interface mechanisms such as a mouse, keyboard, microphone, touchpad, touch screen, voice-recognition system, etc.

Server 701 may be coupled to other devices, such as seismic sources, seismic sensors, or any other data imaging systems. The server may be part of a larger network configuration as in a global area network (GAN) such as the Internet 728, which allows ultimate connection to various landline and/or mobile computing devices.

As described above, the apparatus 700 may be embodied by a computing device. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 702 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 702 may be configured to execute instructions stored in the memory device 704 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a pass-through display or a mobile terminal) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The term "about" is used in this application to mean a variation of up to 20% of the parameter characterized by this term. It will be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular embodiments and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

The disclosed embodiments provide an LSM method for addressing time-lapse seismic data by using filters selected for each survey. It should be understood that this description is not intended to limit the invention. The scope of the invention as defined by the appended claims. Further, in the detailed description of the embodiments, numerous specific details are set forth in order to provide a comprehensive understanding of the claimed invention. However, one skilled in the art would understand that various embodiments may be practiced without such specific details.

Although the features and elements of the present embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims.

References

[1] Tarantola, A., 1987, Inverse problem theory: Methods for data fitting and model parameter estimation: Elsevier Science Publishing Company.

[2] Schuster, G. T., 1993, Least-squares crosswell migration: 63rd Annual International Meeting, SEG, Expanded Abstracts, 110-113, doi: 10.1190/segam2012-1425.1.

[3] Nemeth, T., C. Wu, and G. T. Schuster, 1999, Least-squares migration of incomplete reflection data: Geophysics, 64, 208-221, doi: 10.1190/1.1444517.

[4] Tang, Y., 2008, Wave-equation Hessian by phase encoding: 78th Annual International Meeting, SEG, Expanded Abstracts, 2201-2205.

[5] Claerbout, J., and D. Nichols, 1994, Spectral preconditioning, in SEP-82: Stanford Exploration Project, 183-186.

[6] Rickett, J., 2003, Illumination-based normalization for wave-equation depth migration: Geophysics, 68, 1371-1379.

[7] Guitton, 2004, Amplitude and kinematic corrections of migrated images for nonunitary imaging operators: geophysics, 69, 1017-1024.

[8] Ping Wang, Shouting Huang, and Ming Wang, (2017), "Improved subsalt images with least-squares reverse time migration," Interpretation 5: SN25-SN32.

[9] Candès, E., L. Demanet, D. Donoho, and L. Ying, 2006, Fast Discrete Curvelet Transforms: Multiscale Modeling & Simulation, 5, 861-899.

[10] P. S. Bullen. Handbook of means and their inequalities. Springer, 1987.

[11] Zhao Wang, Rongxin Huang, Yi Xuan, Qing Xu, Scott Morton, and Brad Kuntz, (2017), "Improving OBS-streamer 4D imaging by least-squares migration," SEG Technical Program Expanded Abstracts : 5819-5823.

**Claims**

1.  A least-square migration, LSM, based computer-implemented method for generating a 4D image of a subsurface, the method comprising:

    receiving (500) seismic data d related to the subsurface (210), wherein the seismic data $d$ includes a baseline dataset $d_B$ and a monitor dataset $d_M$, with the monitor dataset $d_M$ being taken later in time than the baseline dataset $d_B$, for the same subsurface (210);

    calculating (502) a baseline filter $\mathcal{F}_B$ and a monitor filter $\mathcal{F}_M$ based on a same common reflectivity $r$ of the subsurface (210) and corresponding remigrated baseline data $m_{B1}$ and remigrated monitor data $m_{M1}$ so that the base filter $\mathcal{F}_B$ applied to the remigrated baseline data $m_{B1}$ equals the monitor filter $\mathcal{F}_M$ applied to the remigrated monitor data $m_{M1}$;

    applying (504) the baseline filter $\mathcal{F}_B$ to raw migrated baseline data $m_{B0}$ and applying the monitor filter $\mathcal{F}_M$ to raw migrated monitor data $m_{M0}$ to generate LSM baseline data $m_B$ and LSM monitor data $m_M$; and

    generating (506) the 4D image of the subsurface based on the LSM baseline data $m_B$ and the LSM monitor data $m_M$.

    wherein the step of calculating comprises:

    performing raw migration, with a baseline migration operator $L_B^T$ on the baseline dataset $d_B$ and with a monitor migration operator $L_M^T$ on the monitor dataset $d_M$, to calculate the baseline raw migrated data $m_{B0}$ and the

monitor raw migrated data $m_{M0}$.

the method being **characterized in**

calculating the remigrated baseline data $m_{B1}$ by applying a baseline demigration operator $L_B$ on the reflectivity $r$,

followed by applying the baseline migration operator $L_B^T$ so that the remigrated baseline data

$$m_{B1} = L_B^T L_B r$$ ; and

calculating the remigrated monitor data $m_{M1}$ by applying a monitor demigration operator $L_M$ on the reflectivity $r$,

followed by applying the monitor migration operator $L_M^T$ so that the remigrated monitor data

$$m_{M1} = L_M^T L_M r$$ .

2. The method of Claim 1, further comprising:

transforming the reflectivity $r$ with a filter transform $\mathcal{C}$, from an image domain to a filter domain;

transforming the remigrated baseline data $m_{B1}$ with the filter transform $\mathcal{C}$, from the image domain to the filter domain; and

transforming the remigrated monitor data $m_{M1}$ with the filter transform $\mathcal{C}$, from the image domain to the filter domain.

3. The method of Claim 2, further comprising:

computing a baseline filter $f_B$ in the filter domain based on a filter domain representation C(r) of the reflectivity r, a filter domain representation $(m_{B1})$ of the remigrated baseline data $m_{B1}$, and a filter domain representation $\mathcal{C}(m_{M1})$ of the remigrated monitor data $m_{M1}$; and

computing a monitor filter $f_M$ in the filter domain based on the filter domain representation C(r) of the reflectivity r, the filter domain representation $(m_{B1})$ of the remigrated baseline data $m_{B1}$, and the filter domain representation $\mathcal{C}(m_{M1})$ of the remigrated monitor data $m_{M1}$.

4. The method of Claim 2, wherein the filter transform $\mathcal{C}$ is a curvelet transform and the filter domain is a curvelet domain.

5. The method of Claim 3, further comprising:
subjecting the baseline filter $f_B$ in the filter domain and the monitor filter $f_M$ in the filter domain to produce a same result when applied to the remigrated baseline data $m_{B1}$ and to remigrated monitor data $m_{M1}$, respectively.

6. The method of Claim 5, further comprising:

transforming (1) the raw migrated baseline data $m_{B0}$ to transformed raw migrated baseline data $\mathcal{C}(m_{B0})$ and (2) the raw migrated monitor data $m_{M0}$ to transformed raw migrated monitor data $\mathcal{C}(m_{M0})$ in the filter domain with the filter transform $\mathcal{C}$,

and the step of applying comprises:

applying the baseline filter $f_B$ in the filter domain, to the transformed raw migrated baseline data $\mathcal{C}(m_{B0})$, and

applying the monitor filter $f_M$ in the filter domain, to the transformed raw migrated monitor data $\mathcal{C}(m_{M0})$, to

generate the LSM baseline data $f_B\mathcal{C}(m_{B0})\,\mathcal{C}(m_{B0})$ in the filter domain and the LSM monitor data $f_M\mathcal{C}(m_{M0})$ in the filter domain; and

transforming back, with an inverse transform $\mathcal{C}^{-1}$, (1) the LSM baseline data $f_M\mathcal{C}(m_B)$ to obtain the LSM baseline data $m_B = \mathcal{C}^{-1}(f_B\mathcal{C}(m_{B0}))$ and (2) the LSM monitor data $f_M\mathcal{C}(m_M)$ to obtain the LSM monitor data

$m_M = \mathcal{C}^{-1}(f_M\mathcal{C}(m_{M0}))$.

7. The method of Claim 1, wherein the LSM method performs a single iteration.

8. A computing device (700) for generating a 4D image of a subsurface based on a least-square migration, LSM, based method, the computing device comprising:

an interface (708) for receiving (500) seismic data d related to the subsurface (210), wherein the seismic data d includes a baseline dataset $d_B$ and a monitor dataset $d_M$, with the monitor dataset $d_M$ being taken later in time then the baseline dataset $d_B$, for the same subsurface (210); and
a processor (702) connected to the interface (708) and configured to,

calculate (502) a baseline filter $\mathcal{F}_B$ and a monitor filter $\mathcal{F}_M$ based on a same common reflectivity $r$ of the subsurface (210) and corresponding remigrated baseline data $m_{B1}$ and remigrated monitor data $m_{M1}$ so that the base filter $\mathcal{F}_B$ applied to the remigrated baseline data $m_{B1}$ equals the monitor filter $\mathcal{F}_M$ applied to the remigrated monitor data $m_{M1}$;

apply (504) the baseline filter $\mathcal{F}_B$ to raw migrated baseline data $m_{B0}$ and applying the monitor filter $\mathcal{F}_M$ to raw migrated monitor data $m_{M0}$ to generate LSM baseline data $m_B$ and LSM monitor data $m_M$; and
generate (506) the 4D image of the subsurface based on the LSM baseline data $m_B$ and the LSM monitor data $m_M$.

wherein the processor is further configured to:

perform raw migration, with a baseline migration operator $L_B^T$ on the baseline dataset $d_B$ and with a monitor migration operator $L_M^T$ on the monitor dataset $d_M$, to calculate the monitor raw baseline data $m_{B0}$ and the monitor raw migrated data $m_{M0}$.
**characterized in that** the processor is further configured to:

calculate the remigrated baseline data $m_{B1}$ by applying a baseline demigration operator $L_B$ on the reflectivity $r$, followed by applying the baseline migration operator $L_B^T$ so that the remigrated baseline data $m_{B1} = L_B^T L_B r$ ; and
calculate the remigrated monitor data $m_{M1}$ by applying a monitor demigration operator $L_M$ on the reflectivity $r$, followed by applying the monitor migration operator $L_M^T$ so that the remigrated monitor data $m_{M1} = L_M^T L_M r$ .

9. The computing device of Claim 8, wherein the processor is further configured to:

transform the reflectivity $r$ with a filter transform $\mathcal{C}$, from an image domain to a filter domain;
transform the remigrated baseline data $m_{B1}$ with the filter transform $\mathcal{C}$, from the image domain to the filter domain; and
transform the remigrated monitor data $m_{M1}$ with the filter transform $\mathcal{C}$, from the image domain to the filter domain.

10. The computing device of Claim 9, wherein the processor is further configured to:

compute a baseline filter $f_B$ in the filter domain based on a filter domain representation C(r) of the reflectivity r, a filter domain representation $(m_{B1})$ of the remigrated baseline data $m_{B1}$, and a filter domain representation $\mathcal{C}(m_{M1})$ of the remigrated monitor data $m_{M1}$; and
compute a monitor filter $f_M$ in the filter domain based on the filter domain representation $\mathcal{C}(r)$ of the reflectivity r, the filter domain representation $(m_{B1})$ of the remigrated baseline data $m_{B1}$, and the filter domain representation $\mathcal{C}(m_{M1})$ of the remigrated monitor data $m_{M1}$.

**Patentansprüche**

1. Auf einer kleinquadratischen Migration (Least-Square Migration, LSM) basierendes computerimplementiertes Verfahren zur Erzeugung eines 4D-Bildes eines Untergrunds, das Verfahren umfassend:

Empfangen (500) von seismischen Daten d, die sich auf den Untergrund (210) beziehen, wobei die seismischen Daten d einen Basisdatensatz $d_B$ und einen Monitordatensatz $d_M$ umfassen, wobei der Monitordatensatz $d_M$ zu einem späteren Zeitpunkt als der Basisdatensatz $d_B$ für denselben Untergrund (210) aufgenommen wurde;

Berechnen (502) eines Basisfilters $F_B$ und eines Monitorfilters $F_M$, basierend auf derselben gemeinsamen Reflektivität r des Untergrunds (210) und entsprechenden remigrierten Basisdaten $m_{B1}$ und remigrierten Monitordaten $m_{M1}$, sodass der Basisfilter $F_B$, angewendet auf die remigrierten Basisdaten $m_{B1}$, gleich dem Monitorfilter $F_M$, angewendet auf die remigrierten Monitordaten $m_{M1}$, ist;

Anwenden (504) des Basisfilters $F_B$ auf roh migrierte Basisdaten $m_{B0}$ und Anwenden des Monitorfilters $F_M$ auf roh migrierte Monitordaten $m_{M0}$, um die LSM-Basisdaten $m_B$ und die LSM-Monitordaten $m_M$ zu erzeugen; und

Erzeugen (506) des 4D-Bildes des Untergrunds basierend auf den LSM-Basisdaten $m_B$ und den LSM-Monitordaten $m_M$;

wobei der Schritt des Berechnens umfasst:

Durchführen einer Rohmigration mit einem Basis-Migrationsoperator $L_B^T$ auf dem Basisdatensatz $d_B$ und mit einem Monitor-Migrationsoperator $L_M^T$ auf dem Monitordatensatz $d_M$, um die roh migrierten Basisdaten $m_{B0}$ und die roh migrierten Monitordaten $m_{M0}$ zu berechnen,

wobei das Verfahren **dadurch gekennzeichnet ist, dass**:

die remigrierten Basisdaten $m_{B1}$ berechnet werden durch Anwenden eines Basis-Demigrationsoperators $L_B$ auf die Reflektivität r, gefolgt vom Anwenden des Basis-Migrationsoperators $L_B^T$, sodass die remigrierten Basisdaten $m_{B1} = L_B^T L_B r$; und

die remigrierten Monitordaten $m_{M1}$ berechnet werden durch Anwenden eines Monitor-Demigrationsoperators $L_M$ auf die Reflektivität r, gefolgt vom Anwenden des Monitor-Migrationsoperators $L_M^T$, sodass die remigrierten Monitordaten $m_{M1} = L_M^T L_M r$.

2. Verfahren nach Anspruch 1, ferner umfassend:

Transformieren der Reflektivität r mit einer Filtertransformation C von einem Bildbereich in einen Filterbereich;

Transformieren der remigrierten Basisdaten $m_{B1}$ mit der Filtertransformation C von dem Bildbereich in den Filterbereich; und

Transformieren der remigrierten Monitordaten $m_{M1}$ mit der Filtertransformation C von dem Bildbereich in den Filterbereich.

3. Verfahren nach Anspruch 2, ferner umfassend:

Berechnen eines Basisfilters $f_B$ im Filterbereich, basierend auf einer Filterbereichsdarstellung C(r) der Reflektivität r, einer Filterbereichsdarstellung $C(m_{B1})$ der remigrierten Basisdaten $m_{B1}$ und einer Filterbereichsdarstellung $C(m_{M1})$ der remigrierten Monitordaten $m_{M1}$; und

Berechnen eines Monitorfilters $f_M$ im Filterbereich, basierend auf der Filterbereichsdarstellung C(r) der Reflektivität r, der Filterbereichsdarstellung $C(m_{B1})$ der remigrierten Basisdaten $m_{B1}$ und der Filterbereichsdarstellung $C(m_{M1})$ der remigrierten Monitordaten $m_{M1}$.

4. Verfahren nach Anspruch 2, wobei die Filtertransformation C eine Curvelet-Transformation ist und der Filterbereich ein Curvelet-Bereich ist.

5. Verfahren nach Anspruch 3, ferner umfassend:
Unterwerfen des Basisfilters $f_B$ im Filterbereich und des Monitorfilters $f_M$ im Filterbereich, sodass sie, wenn sie auf die remigrierten Basisdaten $m_{B1}$ und auf die remigrierten Monitordaten $m_{M1}$ angewendet werden, jeweils dasselbe Ergebnis erzeugen.

6. Verfahren nach Anspruch 5, ferner umfassend:

Transformieren (1) der roh migrierten Basisdaten $m_{B0}$ zu transformierten roh migrierten Basisdaten $C(m_{B0})$ und (2) der roh migrierten Monitordaten $m_{M0}$ zu transformierten roh migrierten Monitordaten $C(m_{M0})$ im Filterbereich mit der Filtertransformation C,
wobei der Schritt des Anwendens umfasst:

Anwenden des Basisfilters $f_B$ im Filterbereich auf die transformierten roh migrierten Basisdaten $C(m_{B0})$ und Anwenden des Monitorfilters $f_M$ im Filterbereich auf die transformierten roh migrierten Monitordaten $C(m_{m0})$, um die LSM-Basisdaten $f_B C(m_{B0}$ im Filterbereich und die LSM-Monitordaten $f_M C(m_{M0})$ im Filterbereich zu erzeugen; und
Rücktransformieren mit einer inversen Transformation $C^{-1}$ (1) der LSM-Basisdaten $f_B C(m_B)$, um die LSM-Basisdaten $m_B = C^{-1}(f_B C(m_{B0}))$ zu erhalten, und (2) der LSM-Monitordaten $f_M(m_M)$, um die LSM-Monitordaten $m_M = C^{-1}(f_M C(m_{M0}))$ zu erhalten.

7. Verfahren nach Anspruch 1, wobei das LSM-Verfahren eine einzelne Iteration durchführt.

8. Computervorrichtung (700) zur Erzeugung eines 4D-Bildes eines Untergrunds, basierend auf einem auf einer kleinquadratischen Migration (LSM) basierenden Verfahren, die Computervorrichtung umfassend:

eine Schnittstelle (708) zum Empfangen (500) von seismischen Daten d, die sich auf den Untergrund (210) beziehen, wobei die seismischen Daten d einen Basisdatensatz $d_a$ und einen Monitordatensatz $d_M$ umfassen, wobei der Monitordatensatz $d_M$ zu einem späteren Zeitpunkt als der Basisdatensatz $d_B$ für denselben Untergrund (210) aufgenommen wurde; und
einen Prozessor (702), der mit der Schnittstelle (708) verbunden und dazu konfiguriert ist,
einen Basisfilter $F_B$ und einen Monitorfilter $F_M$ basierend auf derselben gemeinsamen Reflektivität r des Untergrunds (210) und entsprechenden remigrierten Basisdaten $m_{B1}$ und remigrierten Monitordaten $m_{M1}$ zu berechnen (502), sodass der Basisfilter $F_B$, angewendet auf die remigrierten Basisdaten $m_{B1}$, gleich dem Monitorfilter $F_M$, angewendet auf die remigrierten Monitordaten $m_{M1}$, ist;
den Basisfilter $F_B$ auf roh migrierte Basisdaten $m_{B0}$ anzuwenden (504) und den Monitorfilter $F_M$ auf roh migrierte Monitordaten $m_{M0}$ anzuwenden, um die LSM-Basisdaten $m_B$ und die LSM-Monitordaten $m_M$ zu erzeugen; und
das 4D-Bild des Untergrunds basierend auf den LSM-Basisdaten $m_B$ und den LSM-Monitordaten $m_M$ zu erzeugen (506);
wobei der Prozessor ferner konfiguriert ist, um:

eine Rohmigration durchzuführen unter Verwendung eines Basis-Migrationsoperators $L_B^T$ auf dem Basisdatensatz $d_B$ und eines Monitor-Migrationsoperators $L_M^T$ auf dem Monitordatensatz $d_M$, um die roh migrierten Basisdaten $m_{B0}$ und die roh migrierten Monitordaten $m_{M0}$ zu berechnen;
**dadurch gekennzeichnet, dass** der Prozessor ferner dazu konfiguriert ist:

die remigrierten Basisdaten $m_{B1}$ durch Anwenden eines Basis-Demigrationsoperators $L_B$ auf die Reflektivität r zu berechnen, gefolgt vom Anwenden des Basis-Migrationsoperators $L_B^T$ sodass die remigrierten Basisdaten $m_{B1} = L_B^T L_B r$ ; und
die remigrierten Monitordaten $m_{M1}$ durch Anwenden eines Monitor-Demigrationsoperators $L_M$ auf die Reflektivität r zu berechnen, gefolgt vom Anwenden des Monitor-Migrationsoperators $L_M^T$ , sodass die remigrierten Monitordaten $m_{M1} = L_M^T L_M r$ .

9. Computervorrichtung nach Anspruch 8, wobei der Prozessor ferner dazu konfiguriert ist:

die Reflektivität r mit einer Filtertransformation C von einem Bildbereich in einen Filterbereich zu transformieren;
die remigrierten Basisdaten $m_{B1}$ mit der Filtertransformation C von dem Bildbereich in den Filterbereich zu transformieren; und
die remigrierten Monitordaten $m_{M1}$ mit der Filtertransformation C von dem Bildbereich in den Filterbereich zu transformieren.

10. Computervorrichtung nach Anspruch 9, wobei der Prozessor ferner dazu konfiguriert ist:

einen Basisfilter $f_B$ im Filterbereich basierend auf einer Filterbereichsdarstellung C(r) der Reflektivität r, einer Filterbereichsdarstellung C($m_{B1}$) der remigrierten Basisdaten $m_{B1}$ und einer Filterbereichsdarstellung C($m_{M1}$) der remigrierten Monitordaten $m_{M1}$ zu berechnen; und

einen Monitorfilter $f_M$ im Filterbereich basierend auf der Filterbereichsdarstellung C(r) der Reflektivität r, der Filterbereichsdarstellung C($m_{B1}$) der remigrierten Basisdaten $m_{B1}$ und der Filterbereichsdarstellung C($m_{M1}$) der remigrierten Monitordaten $m_{M1}$ zu berechnen.

## Revendications

1. Procédé mis en œuvre par ordinateur à base de migration des moindres carrés, Least-Square Migration LSM, pour générer une image 4D d'une surface souterraine, le procédé comprenant les faits :

   de recevoir (500) des données sismiques d connexes à la surface souterraine (210), dans lequel les données sismiques d incluent un ensemble de données de base de référence $d_B$ et un ensemble de données de surveillance $d_M$, l'ensemble de données de surveillance $d_M$ étant pris ultérieurement en temps relativement à l'ensemble de données de base de référence $d_B$, pour la même surface souterraine (210) ;
   de calculer (502) un filtre de base de référence $F_B$ et un filtre de surveillance $F_M$ sur la base d'une même réflectivité commune r de la surface souterraine (210) et des données de base de référence remigrées $m_{B1}$ et des données de surveillance remigrées $m_{M1}$ correspondantes de telle sorte que le filtre de base $F_B$ appliqué aux données de base de référence remigrées $m_{B1}$ soit égal au filtre de surveillance $F_M$ appliqué aux données de surveillance remigrées $m_{M1}$ ;
   d'appliquer (504) le filtre de base de référence $F_B$ à des données de base de référence migrées brutes $m_{B0}$ et d'appliquer le filtre de surveillance $F_M$ à des données de surveillance migrées brutes $m_{M0}$ pour générer des données de base de référence LSM $m_B$ et des données de surveillance LSM $m_M$ ; et
   de générer (506) l'image 4D de la surface souterraine sur la base des données de base de référence LSM $m_B$ et des données de surveillance LSM $m_M$,
   dans lequel l'étape consistant à calculer comprend :

   le fait de réaliser une migration brute, avec un opérateur de migration de base de référence $L_B^T$ sur l'ensemble de données de base de référence $d_B$ et avec un opérateur de migration de surveillance $L_M^T$ sur l'ensemble de données de surveillance $d_M$, pour calculer les données migrées brutes de base de référence $m_{B0}$ et les données migrées brutes de surveillance $m_{M0}$,
   le procédé étant **caractérisé par**
   le fait de calculer les données de base de référence remigrées $m_{B1}$ en appliquant un opérateur de démigration de base de référence $L_B$ sur la réflectivité r, puis en appliquant l'opérateur de migration de base de référence $L_B^T$ de telle sorte que les données de base de référence remigrées

   $$m_{B1} = L_B^T L_B r \quad ; \text{et}$$

   de calculer les données de surveillance remigrées $m_{M1}$ en appliquant un opérateur de démigration de surveillance $L_M$ sur la réflectivité r, puis en appliquant l'opérateur de migration de surveillance $L_M^T$ de telle sorte que les données de surveillance remigrées $m_{M1} = L_M^T L_M r$.

2. Procédé de la revendication 1, comprenant en outre les faits :

   de transformer la réflectivité r avec une transformée de filtre C, d'un domaine d'image à un domaine de filtre ;
   de transformer les données de base de référence remigrées $m_{B1}$ avec la transformée de filtre C, du domaine d'image au domaine de filtre ; et
   de transformer les données de surveillance remigrées $m_{M1}$ avec la transformée de filtre C, du domaine d'image au domaine de filtre.

3. Procédé de la revendication 2, comprenant en outre les faits :

   de computer un filtre de base de référence $f_B$ dans le domaine de filtre sur la base d'une représentation de domaine de filtre C(r) de la réflectivité r, d'une représentation de domaine de filtre C($m_{B1}$) des données de base de référence remigrées $m_{B1}$, et d'une représentation de domaine de filtre C($m_{M1}$) des données de surveillance remigrées $m_{M1}$ ; et

de computer un filtre de surveillance $f_M$ dans le domaine de filtre sur la base de la représentation de domaine de filtre C(r) de la réflectivité r, de la représentation de domaine de filtre C($m_{B1}$) des données de base de référence remigrées $m_{B1}$, et de la représentation de domaine de filtre C($m_{M1}$) des données de surveillance remigrées $m_{M1}$.

4. Procédé de la revendication 2, dans lequel la transformée de filtre C est une transformée de courbelette et le domaine de filtre est un domaine de courbelette.

5. Procédé de la revendication 3, comprenant en outre les faits :

le fait de soumettre le filtre de base de référence $f_B$ dans le domaine de filtre et le filtre de surveillance $f_M$ dans le domaine de filtre pour produire un même résultat lorsqu'il est appliqué aux données de base de référence remigrées $m_{B1}$ et aux données de surveillance remigrées $m_{M1}$, respectivement.

6. Procédé de la revendication 5, comprenant en outre les faits :

le fait de transformer (1) les données de base de référence migrées brutes $m_{B0}$ en données de base de référence migrées brutes transformées C($m_{B0}$) et (2) les données de surveillance migrées brutes $m_{M0}$ en données de surveillance migrées brutes transformées C($m_{M0}$) dans le domaine de filtre avec la transformée de filtre C, et l'étape consistant à appliquer comprend les faits :

d'appliquer le filtre de base de référence $f_B$ dans le domaine de filtre aux données de base de référence migrées brutes transformées C($m_{B0}$), et d'appliquer le filtre de surveillance $f_M$ dans le domaine de filtre aux données de surveillance migrées brutes transformées C($m_{M0}$), pour générer les données de base de référence LSM $f_B$C($m_{B0}$) dans le domaine de filtre et les données de surveillance LSM $f_M$C($m_{M0}$) dans le domaine de filtre ; et

de retransformer, avec une transformée inverse $C^{-1}$, (1) les données de base de référence LSM $f_B$C($m_B$) pour obtenir les données de base de référence LSM $m_B = C^{-1}(f_B$C($m_{B0}$)) et (2) les données de surveillance LSM $f_M$C($m_M$) pour obtenir les données de surveillance LSM $m_M = C^{-1}(f_M$C($m_{M0}$)).

7. Procédé de la revendication 1, dans lequel le procédé LSM réalise une seule itération.

8. Dispositif informatique (700) pour générer une image 4D d'une surface souterraine sur la base d'un procédé à base de migration des moindres carrés, Least-Square Migration LSM, le dispositif informatique comprenant :

une interface (708) pour recevoir (500) des données sismiques d connexes à la surface souterraine (210), dans lequel les données sismiques d incluent un ensemble de données de base de référence $d_B$ et un ensemble de données de surveillance $d_M$, l'ensemble de données de surveillance $d_M$ étant pris ultérieurement en temps relativement à l'ensemble de données de base de référence $d_B$, pour la même surface souterraine (210) ; et un processeur (702) connecté à l'interface (708) et configuré pour

calculer (502) un filtre de base de référence $F_B$ et un filtre de surveillance $F_M$ sur la base d'une même réflectivité commune r de la surface souterraine (210) et des données de base de référence remigrées $m_{B1}$ et des données de surveillance remigrées $m_{M1}$ correspondantes de telle sorte que le filtre de base $F_B$ appliqué aux données de base de référence remigrées $m_{B1}$ soit égal au filtre de surveillance $F_M$ appliqué aux données de surveillance remigrées $m_{M1}$ ;

appliquer (504) le filtre de base de référence $F_B$ à des données de base de référence migrées brutes $m_{B0}$ et appliquer le filtre de surveillance $F_M$ à des données de surveillance migrées brutes $m_{M0}$ pour générer des données de base de référence LSM $m_B$ et des données de surveillance LSM $m_M$ ; et

générer (506) l'image 4D de la surface souterraine sur la base des données de base de référence LSM $m_B$ et des données de surveillance LSM $m_M$,

dans lequel le processeur est en outre configuré pour :

réaliser une migration brute, avec un opérateur de migration de base de référence $L_B^T$ sur l'ensemble de données de base de référence $d_B$ et avec un opérateur de migration de surveillance $L_M^T$ sur l'ensemble de données de surveillance $d_M$, pour calculer les données de base de référence de surveillance $m_{B0}$ et les données migrées brutes de surveillance $m_{M0}$,
**caractérisé en ce que** le processeur est en outre configuré pour :

calculer les données de surveillance remigrées $m_{B1}$ en appliquant un opérateur de démigration de surveillance $L_B$ sur la réflectivité r, puis en appliquant l'opérateur de migration de surveillance $L_B^T$ de telle sorte que les données de surveillance remigrées $m_{B1} = L_B^T L_B r$ ; et

calculer les données de surveillance remigrées $m_{M1}$ en appliquant un opérateur de démigration de surveillance $L_M$ sur la réflectivité r, puis en appliquant l'opérateur de migration de surveillance $L_M^T$ de telle sorte que les données de surveillance remigrées $m_{M1} = L_M^T L_M r$.

9. Dispositif informatique de la revendication 8, dans lequel le processeur est en outre configuré pour :

transformer la réflectivité r avec une transformée de filtre C, d'un domaine d'image à un domaine de filtre ;
transformer les données de base de référence remigrées $m_{B1}$ avec la transformée de filtre C, du domaine d'image au domaine de filtre ; et
transformer les données de surveillance remigrées $m_{M1}$ avec la transformée de filtre C, du domaine d'image au domaine de filtre.

10. Dispositif informatique de la revendication 9, dans lequel le processeur est en outre configuré pour :

computer un filtre de base de référence $f_B$ dans le domaine de filtre sur la base d'une représentation de domaine de filtre C(r) de la réflectivité r, d'une représentation de domaine de filtre $C(m_{B1})$ des données de base de référence remigrées $m_{B1}$, et d'une représentation de domaine de filtre $C(m_{M1})$ des données de surveillance remigrées mur ; et
computer un filtre de surveillance $f_M$ dans le domaine de filtre sur la base de la représentation de domaine de filtre C(r) de la réflectivité r, de la représentation de domaine de filtre $C(m_{B1})$ des données de base de référence remigrées $m_{B1}$, et de la représentation de domaine de filtre $C(m_{M1})$ des données de surveillance remigrées $m_{M1}$.

| RECEIVE BASELINE DATASET | RECEIVE MONITOR DATASET |
|---|---|

100 — 102

| RAW MIGRATION OF BASELINE DATASET | RAW MIGRATION OF MONITOR DATASET |
|---|---|

104 — 106

OBTAIN COMMON REFLECTIVITY

108

| DE-MIGRATE REFLECTIVITY IN BASELINE ACQUISITION GEOMETRY | DE-MIGRATE REFLECTIVITY IN MONITOR ACQUISITION GEOMETRY |
|---|---|

110 — 114

| BASELINE RE-MIGRATION | MONITOR RE-MIGRATION |
|---|---|

112 — 116

TRANSFORM REFLECTIVITY AND RE-MIGRATIONS TO THE DOMAIN OF THE FILTER COMPUTATION

118

COMPUTE THE JOINT FILTERS

120

TRANSFORM RAW MIGRATIONS AND APPLY FILTERS

122

| TRANSFORM BACK TO IMAGE DOMAIN TO OBTAIN THE BASELINE 4D LSM | TRANSFORM BACK TO IMAGE DOMAIN TO OBTAIN THE MONITOR 4D LSM |
|---|---|

124 — 126

GENERATE IMAGE OF THE SUBSURFACE BASED ON 4D LSM RESULTS

128

FIG. 1

FIG. 2

EP 4 488 724 B1

FIG. 3A

FIG. 3B

FIG. 4C

FIG. 4B

FIG. 4A

RECEIVING SEISMIC DATA $d$ RELATED TO THE SUBSURFACE, WHEREIN THE SEISMIC DATA $d$ INCLUDES A BASELINE DATASET $d_B$ AND A MONITOR DATASET $d_M$, WITH THE MONITOR DATASET $d_M$ BEING TAKEN LATER IN TIME THEN THE BASELINE DATASET $d_B$, FOR THE SAME SUBSURFACE ⌐500

CALCULATING A BASELINE FILTER $\mathcal{F}_B$ AND A MONITOR FILTER $\mathcal{F}_M$ BASED ON A SAME COMMON REFLECTIVITY $r$ OF THE SUBSURFACE AND CORRESPONDING REMIGRATED BASELINE DATA $m_{B1}$ AND REMIGRATED MONITOR DATA $m_{M1}$ ⌐502

APPLYING THE BASELINE FILTER $\mathcal{F}_B$ TO RAW MIGRATED BASELINE DATA $m_{B0}$ AND APPLYING THE MONITOR FILTER $\mathcal{F}_M$ TO RAW MIGRATED MONITOR DATA $m_{M0}$ TO GENERATE LSM BASELINE DATA $m_B$ AND LSM MONITOR DATA $m_M$ ⌐504

GENERATING THE IMAGE OF THE SUBSURFACE BASED ON THE LSM BASELINE DATA $m_B$ AND THE LSM MONITOR DATA $m_M$ ⌐506

FIG. 5

FIG. 6

700

716　　　　　720　　　　　718

| CD-ROM | DISPLAY | REMOVABLE MEDIA |

722

SERVER

714　　　　　712

701

| CD-ROM DRIVE | | DISK DRIVE |

| USER INPUT INTERFACE |

728

708

| I/O | PROCESSOR |

710

702

| INTERNET |

| RAM | | ROM |

704　　　　　　　　706

FIG. 7

REFERENCES CITED IN THE DESCRIPTION

**Non-patent literature cited in the description**

- **SCHNEIDER, W.** Integral formulation for migration in two and three dimensions. *Geophysics*, 1978, vol. 43, 49-76
- **HEMON, C.** *Equations d'onde et modeles. Geophysical Prospecting*, 1978, vol. 26, 790-821
- **ZHAO, WANG**. *Improving OBS-streamer 4D imaging by least-squares migration*
- **YILMAZ, ÖZ**. Seismic data analysis. Society of Exploration Geophysicists, 2001
- **TARANTOLA, A.** Inverse problem theory: Methods for data fitting and model parameter estimation. Elsevier Science Publishing Company, 1987
- **SCHUSTER, G. T.** Least-squares crosswell migration. *63rd Annual International Meeting, SEG, Expanded Abstracts*, 1993, 110-113
- **NEMETH, T.** ; **C. WU** ; **G. T. SCHUSTER**. Least-squares migration of incomplete reflection data. *Geophysics*, 1999, vol. 64, 208-221
- **TANG, Y.** Wave-equation Hessian by phase encoding. *78th Annual International Meeting, SEG, Expanded Abstracts*, 2008, 2201-2205
- **CLAERBOUT, J.** ; **D. NICHOLS**. Spectral preconditioning, in SEP-82. *Stanford Exploration Project*, 1994, 183-186
- **RICKETT, J.** Illumination-based normalization for wave-equation depth migration. *Geophysics*, 2003, vol. 68, 1371-1379
- **GUITTON**. Amplitude and kinematic corrections of migrated images for nonunitary imaging operators. *geophysics*, 2004, vol. 69, 1017-1024
- **PING WANG** ; **SHOUTING HUANG** ; **MING WANG**. Improved subsalt images with least-squares reverse time migration. *Interpretation*, 2017, vol. 5, SN25-SN32
- **CANDÈS, E** ; **L. DEMANET** ; **D. DONOHO** ; **L. YING**. Fast Discrete Curvelet Transforms. *Multiscale Modeling & Simulation*, 2006, vol. 5, 861-899
- **P. S. BULLEN**. Handbook of means and their inequalities. Springer, 1987
- **ZHAO WANG** ; **RONGXIN HUANG** ; **YI XUAN** ; **QING XU** ; **SCOTT MORTON** ; **BRAD KUNTZ**. Improving OBS-streamer 4D imaging by least-squares migration. *SEG Technical Program Expanded Abstracts*, 2017, 5819-5823